# EUROPÄISCHE PATENTANMELDUNG

(11) **EP 1 767 440 A1**
(43) Veröffentlichungstag der Anmeldung: **28.03.2007**
(21) Anmeldenummer: 05108714.6
(22) Anmeldetag: 21.09.2005
(51) Int. Cl.: B62D 27/06, F16B 35/04

(54) **Verbindung umfassend ein Trägerbauteil, ein Kunststoffbauteil und eine Schraube**

(71) Anmelder: Ford Global Technologies, LLC, Dearborn, MI 48126 (US)
(72) Erfinder: Bertram, Ulrich, 50129, Bergheim (DE); Zenner, Thomas, Dr., 52351, Dueren (DE)
(74) Vertreter: Drömer, Hans-Carsten

(57) **Zusammenfassung**

Die Erfindung betrifft eine Verbindung (1) umfassend ein Trägerbauteil (2), ein Kunststoffbauteil (3) und eine Schraube (4), bei der das Trägerbauteil (2) eine Bohrung (5) hat, welche ein Gewinde (6) zur kraftschlüssigen Aufnahme eines Gewindeabschnitts (7) der Schraube (4) aufweist, wobei das Kunststoffbauteil (3) ein Durchgangsloch (8) zur Aufnahme der Schraube (4) aufweist, durch das die Schraube (4) bis zur Anlage ihres Schraubenkopfes (9) hindurchführbar ist, um mit dem Gewindeabschnitt (7) in dem Gewinde (6) der Bohrung (5) verschraubt zu werden.

Die Erfindung betrifft des weiteren eine Schraube (4) zur Verwendung in einer derartigen Verbindung (1) und ein Verfahren zum Verbinden eines Trägerbauteils (2) mit einem Kunststoffbauteil (3) mittels einer Schraube (4).

Es soll eine Verbindung (1) bereitgestellt werden, mit der die Fertigungs- und Herstellungskosten des Kunststoffbauteils (3) reduziert werden.

Erreicht wird dies mit einer Verbindung (1) der oben genannten Art, die dadurch gekennzeichnet ist, daß die Schraube (4) auf einem Schaftabschnitt zwischen dem Gewindeabschnitt (7) und dem Schraubenkopf (9) einen verdickten, bundförmigen Schaftabschnitt (10) aufweist, dessen Durchmesser d_{Schaft} größer ist als der Durchmesser d_{Bohr} der Bohrung (5) und kleiner als der Durchmesser d_{Loch} des Durchgangsloches (8), wobei dieser verdickte Schaftabschnitt (10) zum Aufbau einer Vorspannkraft dient.

## Beschreibung

Die Erfindung betrifft eine Verbindung umfassend ein Trägerbauteil, ein Kunststoffbauteil und eine Schraube, bei der das Trägerbauteil eine Bohrung hat, welche ein Gewinde zur kraftschlüssigen Aufnahme eines Gewindeabschnitts der Schraube aufweist, wobei das Kunststoffbauteil ein Durchgangsloch zur Aufnahme der Schraube aufweist, durch das die Schraube bis zur Anlage ihres Schraubenkopfes hindurchführbar ist, um mit dem Gewindeabschnitt in dem Gewinde der Bohrung verschraubt zu werden.

Des Weiteren betrifft die Erfindung eine Schraube mit einem Schraubenkopf und einem Gewindeabschnitt zur Verwendung in einer derartigen Verbindung.

Des Weiteren betrifft die Erfindung ein Verfahren zum Verbinden eines Trägerbauteils mit einem Kunststoffbauteil mittels einer Schraube, die einen Schraubenkopf und einen Gewindeabschnitt aufweist, bei dem
■ das Trägerbauteil mit einer Bohrung des Durchmessers d_{Bohr} versehen wird, welche ein Gewinde zur kraftschlüssigen Aufnahme des Gewindeabschnitts der Schraube aufweist, und
■ das Kunststoffbauteil mit einem Durchgangsloch des Durchmessers d_{Loch} zur Aufnahme der Schraube versehen wird, durch das die Schraube bis zur Anlage ihres Schraubenkopfes hindurchgeführt wird, um mit dem Gewindeabschnitt in dem Gewinde der Bohrung verschraubt zu werden.

Schraubenverbindungen der in Rede stehenden Art dienen zur Verbindung von Bauteilen bzw. zur Befestigung eines Bauteils an einem anderen Bauteil, welches als Trägerbauteil dient bzw. bezeichnet werden kann.

Damit die Schraubenverbindung ihre Funktion erfüllt und sich nicht nach erfolgter Montage ungewollt wieder löst, ist es erforderlich, im Rahmen der Montage eine sogenannte Vorspannkraft in die Schraubenverbindung einzubringen. Die Vorspannkraft führt zu einer - vorzugsweise elastischen - Dehnung der Schraube infolge einer Zugkraftbelastung und einem Zusammendrücken der im Kraftfluß liegenden miteinander verbundenen Bauteile infolge einer Druckkraftbelastung.

Die notwendige Vorspannkraft wird über die vergleichsweise kleinen Auflageflächen des Schraubenkopfes und der Gewindeflanken in die Verbindung eingeleitet und getragen, was zu hohen Flächenpressungen führt, die wiederum Kriechvorgänge im Werkstoff auslösen und plastische Verformungen hervorrufen können. Dieses Phänomen wird als "Setzen" bzw. "Setzen der Verbindung" bezeichnet und führt zu einem Vorspannkraftverlust.

In Abhängigkeit von der Größe des Vorspannkraftverlustes kann die Vorspannkraft bzw. Klemmkraft in einem derart großen Umfang abgebaut werden, daß die Schraubenverbindung gefährdet ist. Der Vorspannkraftverlust ist von der Art und der Höhe der Beanspruchung abhängig, wobei insbesondere eine dynamische Belastung zu hohen Vorspannkraftverlusten führt. Die Festigkeit der zu verbindenden Bauteile, ihre Rauhigkeit und die Anzahl der Fugen der Schraubenverbindung nehmen ebenfalls Einfluß auf das Setzverhalten der Verbindung d.h. auf das Ausmaß des Verlustes an Vorspannkraft und damit auf die Größe der Restklemmkraft.

Die Vorspannkraft muß daher bei der Montage der Verbindung ausreichend hoch gewählt werden, so daß die Restklemmkraft der Verbindung nie eine vorgeschriebene bzw. vorgebbare Mindestklemmkraft, welche zur Aufrechterhaltung der Verbindung erforderlich ist, unterschreitet. Wird die Vorspannkraft vollständig abgebaut, liegen die beiden zu verbindenden Bauteile lose aufeinander bzw. aneinander an.

Die voranstehenden Ausführungen zeigen die - hier im Rahmen der vorliegenden Erfindung relevante - Problematik, welche sich bei der Auslegung von Schraubenverbindungen ergibt.

Insbesondere bei der Verwendung von Kunststoffbauteilen verursacht der Vorspannkraftverlust bzw. die Notwendigkeit, eine ausreichend hohe Vorspannkraft in die Verbindung einzubringen, Probleme. Begründet ist dies insbesondere durch die vergleichsweise niedrige Festigkeit von Kunststoff.

Wird ein Kunststoffbauteil mit einem Trägerbauteil, beispielsweise aus Metall, mittels einer Schraube verbunden, kann aufgrund der vergleichsweise niedrigen Festigkeit des Kunststoffes nur eine geringe Vorspannkraft in die Verbindung eingebracht werden, die die Funktionstüchtigkeit der Verbindung nicht ausreichend sicherstellt.

Nach dem Stand der Technik wird daher eine Metallhülse in dem Durchgangsloch des Kunststoffbauteils angeordnet, um die Festigkeit des Kunststoffbauteils im Bereich der Verschraubung zu erhöhen. Diese Metallhülse wird in der Regel in das Kunststoffteil eingespritzt oder eingepreßt, was zu erheblich höheren Fertigungs- und Bauteilkosten führt. D. h. die herkömmliche Vorgehensweise, um der oben beschriebenen Problematik zu begegnen, besteht darin, aus dem zu befestigenden Kunststoffbauteil durch Einbringen einer Metallhülse ein Verbundbauteil zu konzipieren.

Die Anzahl an Verbindungen der in Rede stehenden Art nimmt - insbesondere im Fahrzeugbau und Motorenbau - stetig zu, weshalb auch der wirtschaftliche Nachteil der aus dem Stand der Technik bekannten - zuvor beschriebenen - Lösung ständig an Bedeutung gewinnt und die Kostensenkung bei der Weiterentwicklung derartiger Schraubenverbindungen in den Mittelpunkt der Bemühungen d.h. der konstruktiven Auslegung derartiger Verbindungen gerückt ist.

Die Anzahl an Kunststoffbauteilen steigt gerade im Fahrzeugbau und Motorenbau, da hier die Verwendung von Kunststoffen aufgrund des geringen Gewichts der Kunststoffbauteile bei der Reduzierung des Kraftstoffverbrauchs direkt zielführend ist.

Beispiele für den Einsatz von Kunststoffen zur Ausbildung von Motorenbauteilen sind der Nockenwellendeckel bzw. die Ventilhaube, das Saugrohr bzw. der gesamte Einlaßbereich und die Abdeckung des Nockenwellenantriebs d. h. des Ketten- oder Riemenantriebs.

Vor dem Hintergrund des Gesagten ist es die Aufgabe der vorliegenden Erfindung, eine Verbindung gemäß dem Oberbegriff des Anspruchs 1 bereitzustellen, mit der die aus dem Stand der Technik bekannten Nachteile überwunden werden und mit der insbesondere die Fertigungs- und Herstellungskosten des Kunststoffbauteils reduziert werden.

Eine weitere Teilaufgabe der vorliegenden Erfindung ist es, eine Schraube mit einem Schraubenkopf und einem Gewindeabschnitt zur Verwendung in einer derartigen Verbindung bereitzustellen.

Eine dritte Teilaufgabe der vorliegenden Erfindung ist es, ein Verfahren gemäß dem Oberbegriff des Anspruchs 9 zum Verbinden eines Trägerbauteils mit einem Kunststoffbauteil mittels einer Schraube, die einen Schraubenkopf und einen Gewindeabschnitt aufweist, aufzuzeigen.

Gelöst wird die erste Teilaufgabe durch eine Verbindung umfassend ein Trägerbauteil, ein Kunststoffbauteil und eine Schraube, bei der das Trägerbauteil eine Bohrung hat, welche ein Gewinde zur kraftschlüssigen Aufnahme eines Gewindeabschnitts der Schraube aufweist, wobei das Kunststoffbauteil ein Durchgangsloch zur Aufnahme der Schraube aufweist, durch das die Schraube bis zur Anlage ihres Schraubenkopfes hindurchführbar ist, um mit dem Gewindeabschnitt in dem Gewinde der Bohrung verschraubt zu werden, und die dadurch gekennzeichnet ist, daß die Schraube auf einem Schaftabschnitt zwischen dem Gewindeabschnitt und dem Schraubenkopf einen verdickten, bundförmigen Schaftabschnitt aufweist, dessen Durchmesser d_{Schaft} größer ist als der Durchmesser d_{Bohr} der Bohrung und kleiner als der Durchmesser d_{Loch} des Durchgangsloches, wobei dieser verdickte Schaftabschnitt zum Aufbau einer Vorspannkraft dient.

Vorteilhaft sind Ausführungsformen der Verbindung, bei denen das Trägerbauteil zumindest im Bereich der Verschraubung aus Metall gefertigt ist.

Die erfindungsgemäße Verbindung zeichnet sich dadurch aus, daß das Kunststoffbauteil durch geeignete konstruktive Maßnahmen aus dem Bereich des Kraftflusses der Vorspannkraft entfernt wird. Während bei herkömmlichen Verbindungen nach dem Stand der Technik das Kunststoffbauteil zwischen dem Gewinde und dem Schraubenkopf d.h. zwischen den Stellen, an denen die Vorspannkraft eingeleitet und übertragen wird, zusammengedrückt wird, liegt das Kunststoffteil erfindungsgemäß außerhalb des Kraftflusses der Vorspannkraft, da bei der erfindungsgemäßen Verbindung die Vorspannkraft über das Gewinde und den verdickten, bundförmigen Schaftabschnitt ausschließlich in das Trägerbauteil eingeleitet wird. Dabei liegt das Kunststoffbauteil nach wie vor - wie bei herkömmlichen Verbindungen - prinzipbedingt zwischen dem Gewinde und dem Schraubenkopf.

Dadurch wird die erste der Erfindung zugrunde liegende Teilaufgabe gelöst, nämlich eine Verbindung bereitzustellen, mit der die aus dem Stand der Technik bekannten Nachteile überwunden werden und mit der insbesondere die Fertigungs- und Herstellungskosten des Kunststoffbauteils reduziert werden.

Denn mittels der erfindungsgemäßen Verbindung kann auf das Einbringen einer Metallhülse in das Durchgangsloch des Kunststoffbauteils verzichtet werden. Es sind auch sonst keine Maßnahmen zur Erhöhung der Festigkeit des Kunststoffbauteils im Bereich der Verschraubung erforderlich, weshalb zusammen mit den nicht erforderlichen Maßnahmen auch die aus dem Stand der Technik bekannten Kosten entfallen.

Bei der Festlegung der Höhe der Vorspannkraft und ihrem Einbringen in die Schraubenverbindung im Rahmen des Montagevorganges, erweist sich die niedrige Festigkeit des Kunststoffbauteils nicht mehr als hinderlich. Die niedrige Festigkeit des Kunststoffbauteils hat im Hinblick auf die Bemessung der Vorspannkraft keine Relevanz mehr.

Die erfindungsgemäße Verbindung weist zudem eine geringere Anzahl an Fugen auf, die für den Vorspannkraftverlust relevant sind. Die Anzahl der Verbindungsfugen im Bereich des Kraftflusses hat maßgeblichen Einfluß auf das Setzverhalten der Verbindung, wobei mit steigender Fugenzahl der Vorspannkraftverlust ebenfalls zunimmt. Eine Reduzierung der Fugen im Kraftfluß der Vorspannkraft - wie bei der erfindungsgemäßen Verbindung - verringert folglich den Vorspannkraftverlust. Gegenüber einer herkömmlichen Verbindung weist die erfindungsgemäße Verbindung mindestens eine Fuge weniger auf, nämlich die Fuge die sich zusätzlich ergibt, falls das Kunststoffbauteil im Kraftfluß angeordnet wird. Bei Verwendung von Unterlegscheiben und dergleichen im Bereich des Schraubenkopfes kann die Anzahl der für die Vorspannkraft maßgeblichen Fugen mittels einer erfindungsgemäßen Verbindung gegenüber einer herkömmlichen Verbindung weiter reduziert werden.

Vorzugsweise wird zwischen dem Gewindeabschnitt und dem verdickten, bundförmigen Schaftabschnitt ein gewindefreier Schaftabschnitt mit der Länge I_{Dehn} vorgesehen, was sich - im Vergleich zu Ausführungsformen, bei denen sich der Gewindeabschnitt direkt an den bundförmigen Schaftabschnitt anschließt - ebenfalls vorteilhaft auf die Vorspannkraft auswirkt und dem Vorspannkraftverlust entgegenwirkt. Dabei entspricht die freie Klemmlänge dem Abstand des Gewindeabschnitts der Schraube von der Auflagefläche des verdickten, bundförmigen Schaftabschnitts.

Vorteilhaft sind Ausführungsformen der Verbindung, bei denen zur Ausbildung einer größeren Auflagefläche eine Unterlegscheibe zwischen dem Schraubenkopf und dem Kunststoffbauteil vorgesehen ist. Die Vergrößerung der Auflagefläche sorgt für eine Verminderung der Flächenpressung im Bereich der Auflage des Schraubenkopfes auf dem Kunststoffbauteil, was der niedrigen Festigkeit des Kunststoffbauteils entgegenkommt und einem Kriechen des Kunststoffes infolge hoher Belastung entgegenwirkt.

Diese Ausführungsform hat insbesondere Vorteile, falls die Paßklemmlänge I_{k,pass}, welche sich aus dem Abstand der Auflagefläche des Schraubenkopfes und der Auflagefläche des verdickten Schaftabschnitts bestimmt, kleiner ist als die Dicke d_{Kunst} des Kunststoffbauteils im Bereich der Verschraubung, so daß das Kunststoffbauteil leicht eingespannt ist und zusammengedrückt wird.

Vorteilhaft sind dabei Ausführungsformen der Verbindung, bei denen die Unterlegscheibe und der Schraubenkopf ein monolithisches Bauteil bilden. Die Ausbildung des monolithischen Bauteils erfolgt entweder dadurch, daß beide Bauteile - Schraube und Unterlegscheibe - aus einem Stück gefertigt werden, oder alternativ die beiden originären Einzelteile - beispielsweise durch Stoffschluß oder Formschluß - unlösbar miteinander verbunden werden. In beiden Fällen wird die Anzahl der Einzelteile der Verbindung vermindert und die Anzahl der Fugen im Bereich des Schraubenkopfes reduziert, was zwar keinen vorteilhaften Einfluß auf die eigentliche Schraubenverbindung hat, aber - falls das Kunststoffbauteil leicht verspannt montiert wird - einem Abbau der Spannkraft im Kunststoffbauteil entgegenwirkt.

Vorteilhaft sind Ausführungsformen der Verbindung, bei denen zwischen dem Schraubenkopf und dem Kunststoffbauteil ein elastisches Zwischenelement angeordnet ist. Falls ein Verspannen des Kunststoffbauteils nicht möglich ist, beispielsweise aufgrund von Fertigungstoleranzen oder einer nicht ausreichend hohen Festigkeit des Kunststoffbauteils, kann eine spielfreie Anlage des Schraubenkopfes auf dem Kunststoffbauteil durch Vorsehen eines elastischen Zwischenelementes gewährleistet werden. Dadurch werden ungewollte Bewegungen des Kunststoffbauteils verhindert, insbesondere Vibrationen, beispielsweise einer Abdeckung eines Riementriebes, wodurch auch einer ungewünschten Geräuschentwicklung entgegengewirkt wird. Derartige Vibrationen stellen im Hinblick auf die Schraubenverbindung eine dynamische Belastung dar, welche - wie bereits oben ausgeführt - gerade im Hinblick auf den Vorspannkraftverlust kritisch zu bewerten sind. Darüber hinaus können derartige Vibrationen aber auch zu einer Beschädigung, insbesondere einem Dauerbruch, des Kunststoffteils selbst führen.

Vorteilhaft sind dabei Ausführungsformen der Verbindung, bei denen das elastische Zwischenelement ein Gummiring ist.

Vorteilhaft sind in diesem Zusammenhang auch Ausführungsformen der Verbindung, bei denen die Paßklemmlänge l_{k,pass}, welche sich aus dem Abstand der Auflagefläche des Schraubenkopfes und der Auflagefläche des verdickten Schaftabschnitts bestimmt, kleiner ist als die Dicke d_{Kunst} des Kunststoffbauteils im Bereich der Verschraubung, so daß das Kunststoffbauteil leicht eingespannt ist und zusammengedrückt wird. Das Ziel dieser Ausführungsform ist es, eine ungewollte Bewegung des Kunststoffbauteils zu verhindern d.h. eine spielfreie Anlage des Schraubenkopfes auf dem Kunststoffbauteil sicherzustellen, wie bereits zuvor für die Anordnung eines elastischen Zwischenelementes beschrieben, weshalb auf die entsprechenden Ausführungen Bezug genommen wird.

Vorteilhaft sind Ausführungsformen der Verbindung, bei denen die Schraube zwischen dem Gewindeabschnitt und dem verdickten, bundförmigen Schaftabschnitt einen dehnschraubenförmigen, gewindefreien Schaftabschnitt mit der Länge l_{Dehn} aufweist. Die Schraube verfügt dabei im Bereich der freien Klemmlänge über die Vorteile einer Dehnschraube. Insbesondere bei einer dynamischen Beanspruchung der Verbindung, wie sie beim Betrieb eines Kraftfahrzeuges bzw. einer Brennkraftmaschine vorliegt, sorgt diese Ausbildung der Schraube für eine Verbesserung der Dauerhaltbarkeit aufgrund einer erhöhten elastischen Nachgiebigkeit der Schraube.

Die zweite Teilaufgabe wird gelöst durch eine Schraube mit einem Schraubenkopf und einem Gewindeabschnitt, die dadurch gekennzeichnet ist, daß die Schraube auf einem Schaftabschnitt zwischen dem Gewindeabschnitt und dem Schraubenkopf einen verdickten, bundförmigen Schaftabschnitt aufweist, dessen Durchmesser d_{Schaft} größer ist als der Außendurchmesser des Gewindeabschnittes. Es wird Bezug genommen auf die zuvor gemachten Ausführungen.

Die dritte Teilaufgabe wird gelöst durch ein Verfahren zum Verbinden eines Trägerbauteils mit einem Kunststoffbauteil mittels einer Schraube, die einen Schraubenkopf und einen Gewindeabschnitt aufweist, bei dem
■ das Trägerbauteil mit einer Bohrung des Durchmessers d_{Bohr} versehen wird, welche ein Gewinde zur kraftschlüssigen Aufnahme des Gewindeabschnitts der Schraube aufweist,
■ das Kunststoffbauteil mit einem Durchgangsloch des Durchmessers d_{Loch} zur Aufnahme der Schraube versehen wird, durch das die Schraube bis zur Anlage ihres Schraubenkopfes hindurchgeführt wird, um mit dem Gewindeabschnitt in dem Gewinde der Bohrung verschraubt zu werden,
   und das dadurch gekennzeichnet ist, daß
■ die Schraube zwischen dem Gewindeabschnitt und dem Schraubenkopf mit einem verdickten, bundförmigen Schaftabschnitt versehen wird, dessen Durchmesser d_{Schaft} größer ist als der Durchmesser d_{Bohr} der Bohrung und kleiner als der Durchmesser d_{Loch} des Durchgangsloches, wobei dieser verdickte Schaftabschnitt zum Aufbau einer Vorspannkraft dient.

Das bereits für die erfindungsgemäße Verbindung Gesagte hat ebenfalls für das erfindungsgemäße Verfahren Gültigkeit. Insbesondere weist das erfindungsgemäße Verfahren im Vergleich zu herkömmlichen Verfahren zur Ausbildung einer derartigen Schraubenverbindung grundsätzlich den Vorteil auf, daß die Fertigung des Kunststoffbauteils weniger komplex und kostengünstiger ist, da auf eine Verstärkung des Durchgangslochbereichs verzichtet werden kann.

Das Kunststoffbauteil wird mit einem Durchgangsloch versehen, dessen Durchmesser d_{Loch} größer ist als der Durchmesser d_{Schaft} des verdickten Schraubenschaftes. Dies soll das Fügen von Kunststoffbauteil und Schraube ermöglichen d. h. das Hindurchstecken der Schraube bis zur Anlage des Schraubenkopfes. An dieser Stelle soll angemerkt werden, daß im Rahmen der vorliegenden Erfindung immer Bezug genommen wird auf die Auflagefläche der Schraube, auch wenn zwischen dem Schraubenkopf und dem Kunststoffbauteil eine Unterlegscheibe angeordnet wird und strenggenommen nicht der Schraubenkopf auf dem Kunststoffteil aufliegt, sondern die Unterlegscheibe, auf die sich dann der Schraubenkopf anschließt.

Wie bereits weiter oben im Zusammenhang mit der erfindungsgemäßen Verbindung ausgeführt wurde, ist es vorteilhaft, die Verbindung in der Art auszulegen, daß das Kunststoffbauteil fixiert ist und kein Spiel aufweist, welches Bewegungen und insbesondere Vibrationen zulassen würde. Aus diesem Grunde ist es auch vorteilhaft, die beiden folgenden Verfahrensvarianten anzuwenden.

Vorteilhaft sind zum einen Ausführungsformen des Verfahrens, bei denen die Paßklemmlänge I_{k,pass}, welche sich aus dem Abstand der Auflagefläche des Schraubenkopfes und der Auflagefläche des verdickten Schaftabschnitts bestimmt, kleiner gewählt wird als die Dicke d_{Kunst} des Kunststoffbauteils im Bereich der Verschraubung, so daß gilt: I_{k,pass} < d_{Kunst}.

Vorteilhaft sind aber auch zum anderen Ausführungsformen des Verfahrens, bei denen die Paßklemmlänge I_{k,pass}, welche sich aus dem Abstand der Auflagefläche des Schraubenkopfes und der Auflagefläche des verdickten Schaftabschnitts bestimmt, größer oder gleich der Dicke d_{Kunst} des Kunststoffbauteils im Bereich der Verschraubung gewählt wird, so daß gilt: I_{k,pass} ≥ d_{Kunst}, und zwischen dem Schraubenkopf und dem Kunststoffbauteil ein elastisches Zwischenelement angeordnet wird.

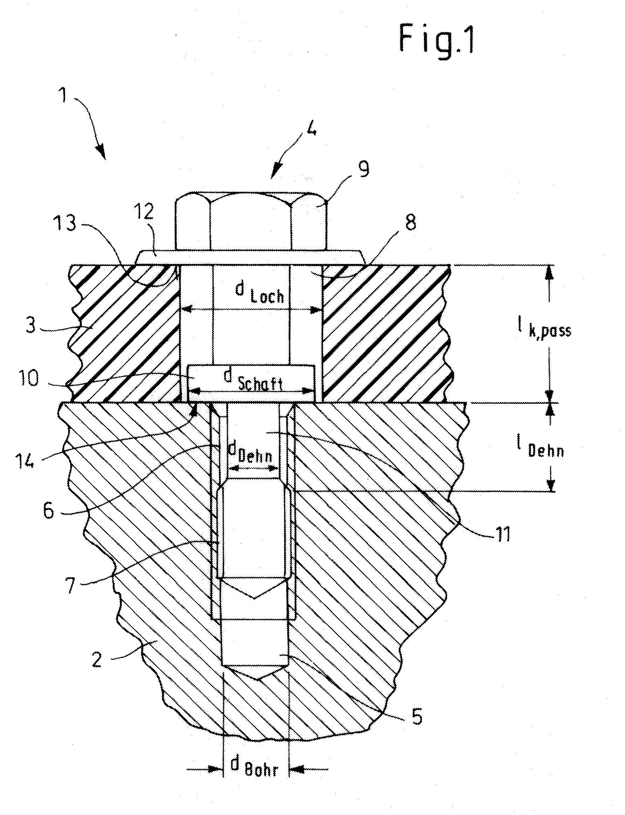

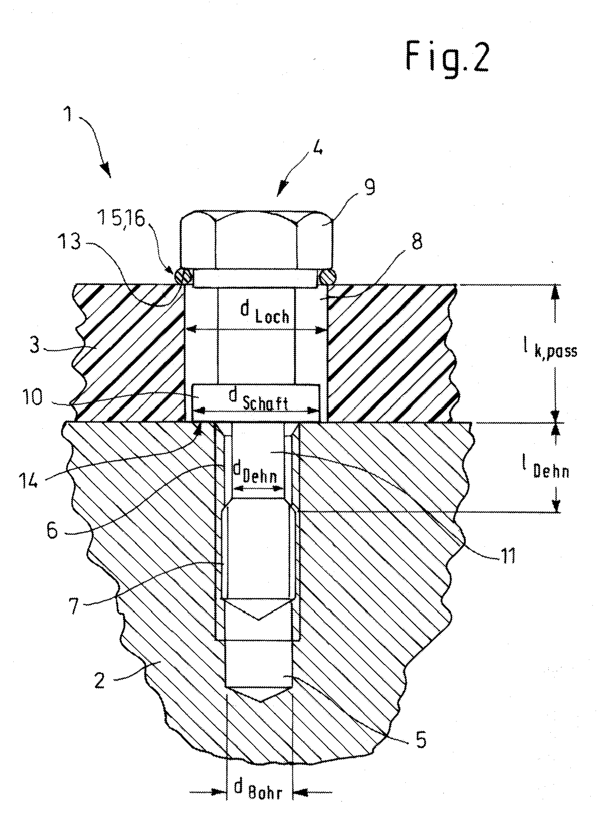

Im folgenden wird die Erfindung anhand von zwei Ausführungsbeispielen gemäß den Figuren 1 und 2 näher beschrieben. Hierbei zeigt:
- Fig. 1: schematisch in einem Längsschnitt eine erste Ausführungsform einer Verbindung im montierten d.h. verschraubten Zustand, und
- Fig. 2: schematisch in einem Längsschnitt eine zweite Ausführungsform einer Verbindung im montierten d.h. verschraubten Zustand.

Figur 1 zeigt schematisch in einem Längsschnitt eine erste Ausführungsform einer Verbindung 1 im montierten d. h. verschraubten Zustand. Eine derartige Verbindung 1 findet beispielsweise Verwendung in einer Brennkraftmaschine oder im Fahrzeugbau.

Die Verbindung 1 umfaßt drei selbständige Bauteile, nämlich ein Trägerbauteil 2, ein Kunststoffbauteil 3 und eine Schraube 4, wobei das Kunststoffbauteil 3 mittels der Schraube 4 an dem Trägerbauteil 2 befestigt d.h. verschraubt wird. Das Trägerbauteil 2 verfügt über eine höhere Festigkeit als das Kunststoffbauteil 3 und ist vorzugsweise im wesentlichen aus Metall gefertigt.

Das Trägerbauteil 2 ist mit einer Bohrung 5 versehen, die ein Gewinde 6 aufweist. Im montierten d. h. verschraubten Zustand der Verbindung 1 steht dieses Gewinde 6 in Eingriff mit einem Gewindeabschnitt 7 der Schraube 4.

Das Kunststoffbauteil 3 weist zur Aufnahme der Schraube 4 ein Durchgangsloch 8 auf, durch das die Schraube 4 bis zur Anlage ihres Schraubenkopfes 9 hindurchführbar ist, um mit dem Gewindeabschnitt 7 in dem Gewinde 6 der Bohrung 5 verschraubt zu werden.

Um das Kunststoffbauteil 3 mit seiner geringen Festigkeit und hohen Kriechneigung aus dem Bereich des Kraftflusses der Vorspannkraft in einen Bereich niedrigerer Belastung zu verlagern, weist die Schraube 4 zwischen dem Gewindeabschnitt 7 und dem Schraubenkopf 9 einen verdickten, bundförmigen Schaftabschnitt 10 auf, der im verschraubten Zustand auf dem Trägerbauteil 2 aufliegt und zur Einleitung und Übertragung einer ausreichend hohen Vorspannkraft dient.

Hierzu muß der Durchmesser d_{Schaft} des verdickten, bundförmigen Schaftabschnitts 10 größer sein als der Durchmesser d_{Bohr} der Bohrung 5, damit sich der verdickte Schaftabschnitt 10 auf dem Trägerbauteil 2 abstützen kann. Andererseits muß der verdickte Schaftabschnitt 10 kleiner sein als der Durchmesser d_{Loch} des Durchgangsloches 8 des Kunststoffbauteils 3, um überhaupt ein Fügen der Bauteile 2,3,4 zu ermöglichen.

Es ist eine Unterlegscheibe 12 vorgesehen, die einteilig mit dem Schraubenkopf 9 ausgebildet ist. Der Schraubenkopf 9 der Schraube 4 liegt im verschraubten Zustand auf dem Kunststoffbauteil 3 auf, wobei die Paßklemmlänge l_{k,pass}, welche sich aus dem Abstand der Auflagefläche 13 des Schraubenkopfes 9 auf dem Kunststoffbauteil 3 und der Auflagefläche 14 des verdickten Schaftabschnitts 10 auf dem Trägerbauteil 2 bestimmt, kleiner ist als die Dicke d_{Kunst} des Kunststoffbauteils 3 im Bereich der Verschraubung. Dadurch wird das Kunststoffbauteil 3 leicht eingespannt und zusammengedrückt, wodurch ungewollte Bewegungen des Kunststoffbauteils 3 verhindert werden. Auf diese Weise wird auch eine dynamische Belastung der Verbindung 1 durch Vibrationen des Kunststoffbauteils 3 vermieden und einem unerwünschten Lösen der Verbindung 1 entgegengewirkt.

Die Schraube 4 weist zwischen dem Gewindeabschnitt 7 und dem verdickten, bundförmigen Schaftabschnitt 10 einen dehnschraubenförmigen, gewindefreien Schaftabschnitt 11 mit der Länge l_{Dehn} auf, wobei diese Länge l_{Dehn} gleichzeitig die freie Klemmlänge darstellt. Diese Ausbildung der Schraube 4 sorgt für eine Steigerung der Dauerhaltbarkeit aufgrund einer erhöhten elastischen Nachgiebigkeit der Schraube 4 und damit für eine gesteigerte Resistenz gegenüber dynamischen Beanspruchungen, wie sie beispielsweise beim Betrieb einer Brennkraftmaschine auftreten.

Figur 2 zeigt schematisch in einem Längsschnitt eine zweite Ausführungsform einer Verbindung im montierten d.h. verschraubten Zustand.

Im Unterschied zu der in Figur 1 dargestellten Ausführungsform verfügt die zweite Ausführungsform der Verbindung über ein elastisches Zwischenelement 15. Im übrigen wird bezug genommen auf Figur 1. Für dieselben Bauteile wurden dieselben Bezugszeichen verwendet.

Als Zwischenelement 15 dient ein O-Ring 16 d. h. ein Gummiring. Diese Ausführungsform eignet sich insbesondere für Anwendungsfälle, bei denen ein Verspannen des Kunststoffbauteils 3 - beispielsweise aufgrund von Fertigungstoleranzen oder einer nicht ausreichend hohen Festigkeit des Kunststoffbauteils 3 - nicht möglich ist. Eine spielfreie Anlage des Schraubenkopfes 9 auf dem Kunststoffbauteil 3 wird dabei durch das Vorsehen eines elastischen Zwischenelementes 15 gewährleistet.

Die Paßklemmlänge l_{k,pass}, welche sich aus dem Abstand der Auflagefläche 13 des Schraubenkopfes 9 und der Auflagefläche 14 des verdickten Schaftabschnitts 10 bestimmt, ist bei der in Figur 2 dargestellten Ausführungsform größer als die Dicke d_{Kunst} des Kunststoffbauteils 3 im Bereich der Verschraubung.

### Bezugszeichen

- 1: Verbindung
- 2: Trägerbauteil
- 3: Kunststoffbauteil
- 4: Schraube
- 5: Bohrung
- 6: Gewinde
- 7: Gewindeabschnitt
- 8: Durchgangsloch
- 9: Schraubenkopf
- 10: verdickter, bundförmiger Schaftabschnitt
- 11: gewindefreier Schaftabschnitt
- 12: Unterlegscheibe
- 13: Auflagefläche des Schraubenkopfes 9 auf dem Kunststoffbauteil 3
- 14: Auflagefläche des verdickten Schaftabschnitts 10 auf dem Trägerbauteil 2
- 15: Zwischenelement
- 16: O-Ring

- d_{Bohr}: Durchmesser der Bohrung 5 im Trägerbauteil 2
- d_{Dehn}: Durchmesser des gewindefreien Schaftabschnittes 11 der Schraube 4
- d_{Kunst}: Dicke des Kunststoffbauteils 3
- d_{Loch}: Durchmesser des Durchgangsloches 8 im Kunststoffbauteil 3
- d_{Schaft}: Durchmesser des verdickten, bundförmigen Schaftabschnittes 10 der Schraube 4
- l_{Dehn}: Länge des gewindefreien Schaftabschnittes 11, freie Klemmlänge
- l_{k,pass}: Paßklemmlänge

## Patentansprüche

1. Verbindung (1) umfassend ein Trägerbauteil (2), ein Kunststoffbauteil (3) und eine Schraube (4), bei der das Trägerbauteil (2) eine Bohrung (5) hat, welche ein Gewinde (6) zur kraftschlüssigen Aufnahme eines Gewindeabschnitts (7) der Schraube (4) aufweist, wobei das Kunststoffbauteil (3) ein Durchgangsloch (8) zur Aufnahme der Schraube (4) aufweist, durch das die Schraube (4) bis zur Anlage ihres Schraubenkopfes (9) hindurchführbar ist, um mit dem Gewindeabschnitt (7) in dem Gewinde (6) der Bohrung (5) verschraubt zu werden, **dadurch gekennzeichnet, daß** die Schraube (4) auf einem Schaftabschnitt zwischen dem Gewindeabschnitt (7) und dem Schraubenkopf (9) einen verdickten, bundförmigen Schaftabschnitt (10) aufweist, dessen Durchmesser d_{Schaft} größer ist als der Durchmesser d_{Bohr} der Bohrung (5) und kleiner als der Durchmesser d_{Loch} des Durchgangsloches (8), wobei dieser verdickte Schaftabschnitt (10) zum Aufbau einer Vorspannkraft dient.

2. Verbindung (1) nach Anspruch 1, **dadurch gekennzeichnet, daß** zur Ausbildung einer größeren Auflagefläche (13) eine Unterlegscheibe (12) zwischen dem Schraubenkopf (9) und dem Kunststoffbauteil (3) vorgesehen ist.

3. Verbindung (1) nach Anspruch 2, **dadurch gekennzeichnet, daß** die Unterlegscheibe (12) und der Schraubenkopf (9) ein monolithisches Bauteil bilden.

4. Verbindung (1) nach einem der vorherigen Ansprüche, **dadurch gekennzeichnet, daß** zwischen dem Schraubenkopf (9) und dem Kunststoffbauteil (3) ein elastisches Zwischenelement (15) angeordnet ist.

5. Verbindung (1) nach Anspruch 4, **dadurch gekennzeichnet, daß** das elastische Zwischenelement (15) ein Gummiring (16) ist.

6. Verbindung (1) nach einem der Ansprüche 1 bis 4, **dadurch gekennzeichnet, daß** die Paßklemmlänge l_{k,pass}, welche sich aus dem Abstand der Auflagefläche (13) des Schraubenkopfes (9) und der Auflagefläche (14) des verdickten Schaftabschnitts (10) auf dem Trägerbauteil (2) bestimmt, kleiner ist als die Dicke d_{Kunst} des Kunststoffbauteils (3) im Bereich der Verschraubung d.h. l_{k,pass} < d_{Kunst}.

7. Verbindung (1) nach einem der vorherigen Ansprüche, **dadurch gekennzeichnet, daß** die Schraube (4) zwischen dem Gewindeabschnitt (7) und dem verdickten, bundförmigen Schaftabschnitt (10) einen dehnschraubenförmigen, gewindefreien Schaftabschnitt (11) mit der Länge l_{Dehn} aufweist.

8. Schraube (4) mit einem Schraubenkopf (9) und einem Gewindeabschnitt (7) zur Verwendung in einer Verbindung (1) nach einem der vorherigen Ansprüche, **dadurch gekennzeichnet, daß** die Schraube (4) auf einem Schaftabschnitt zwischen dem Gewindeabschnitt (7) und dem Schraubenkopf (9) einen verdickten, bundförmigen Schaftabschnitt (10) aufweist, dessen Durchmesser d_{Schaft} größer ist als der Außendurchmesser des Gewindeabschnittes (7).

9. Verfahren zum Verbinden eines Trägerbauteils (2) mit einem Kunststoffbauteil (3) mittels einer Schraube (4), die einen Schraubenkopf (9) und einen Gewindeabschnitt (7) aufweist, bei dem
■ das Trägerbauteil (2) mit einer Bohrung (5) des Durchmessers d_{Bohr} versehen wird, welche ein Gewinde (6) zur kraftschlüssigen Aufnahme des Gewindeabschnitts (7) der Schraube (4) aufweist,
■ das Kunststoffbauteil (3) mit einem Durchgangsloch (8) des Durchmessers d_{Loch} zur Aufnahme der Schraube (4) versehen wird, durch das die Schraube (4) bis zur Anlage ihres Schraubenkopfes (9) hindurchgeführt wird, um mit dem Gewindeabschnitt (7) in dem Gewinde (6) der Bohrung (5) verschraubt zu werden,
**dadurch gekennzeichnet, daß**
■ die Schraube (4) zwischen dem Gewindeabschnitt (7) und dem Schraubenkopf (9) mit einem verdickten, bundförmigen Schaftabschnitt (10) versehen wird, dessen Durchmesser d_{Schaft} größer ist als der Durchmesser d_{Bohr} der Bohrung (5) und kleiner als der Durchmesser d_{Loch} des Durchgangsloches (8), wobei dieser verdickte Schaftabschnitt (10) zum Aufbau einer Vorspannkraft dient.

10. Verfahren nach Anspruch 9, **dadurch gekennzeichnet, daß** die Paßklemmlänge l_{k,pass}, welche sich aus dem Abstand der Auflagefläche (13) des Schraubenkopfes (9) und der Auflagefläche (14) des verdickten Schaftabschnitts (10) bestimmt, kleiner gewählt wird als die Dicke d_{Kunst} des Kunststoffbauteils (3) im Bereich der Verschraubung, so daß gilt: l_{k,pass} < d_{Kunst}.

11. Verfahren nach Anspruch 9, **dadurch gekennzeichnet, daß** die Paßklemmlänge l_{k,pass}, welche sich aus dem Abstand der Auflagefläche (13) des Schraubenkopfes (9) und der Auflagefläche (14) des verdickten Schaftabschnitts (10) bestimmt, größer oder gleich der Dicke d_{Kunst} des Kunststoffbauteils (3) im Bereich der Verschraubung gewählt wird, so daß gilt: l_{k,pass} ≥ d_{Kunst}, und zwischen dem Schraubenkopf (9) und dem Kunststoffbauteil (3) ein elastisches Zwischenelement (15) angeordnet wird.
